# EUROPÄISCHE PATENTSCHRIFT

(11) **EP 2 788 259 B1**
(45) Veröffentlichungstag und Bekanntmachung des Hinweises auf die Patenterteilung: **24.08.2016**
(21) Anmeldenummer: 12798304.7
(22) Anmeldetag: 10.12.2012
(51) Int. Cl.: B65B 9/04, B65B 31/02, B65B 47/08, B65B 51/00, B29C 49/48, B29C 51/00, B29C 65/00, B29C 65/18, B29C 65/76

(54) **VERPACKUNGSMASCHINE MIT EINEM KOMBINIERTEN FORM- UND SIEGELWERKZEUG**
PACKAGING MACHINE WITH A COMBINED SHAPING AND SEALING TOOL
MACHINE D'EMBALLAGE POURVUE D'UN OUTIL COMBINÉ DE FORMAGE ET DE SCELLEMENT

(30) Priorität: 09.12.2011 DE 102011120601
(43) Veröffentlichungstag der Anmeldung: 15.10.2014
(73) Patentinhaber: GEA Food Solutions Germany GmbH, 35216 Biedenkopf-Wallau (DE)
(72) Erfinder: MEYER, Klaus, 35236 Breidenbach (DE); DIETRICH, Andreas, 35216 Biedenkopf (DE)
(74) Vertreter: Wolff, Felix
(86) Internationale Anmeldenummer: PCT/EP2012/074936
(87) Internationale Veröffentlichungsnummer: WO 2013/083834

(56) Entgegenhaltungen:
- WO-A1-87/02965
- DE-U1- 20 312 512
- US-A- 4 277 931
- US-A- 5 101 611
- US-A- 5 103 618
- US-A- 5 323 590

## Beschreibung

Die vorliegende Erfindung betrifft eine Verpackungsmaschine mit einer kombinierten Form- und Siegelstation, die ein Oberwerkzeug und ein Unterwerkzeug aufweist und die eine Mittenfolienbahn formt und an eine Unterfolienbahn siegelt.

Verpackungen weisen heutzutage oftmals mehrere Produkte auf, die durch eine Mittenfolienbahn voneinander getrennt sind. Derartige Verpackungen werden als Mehrlagenfolienverpackungen bezeichnet. Die DE 10 2005 048 491 B4 offenbart eine Verpackungsmaschine um eine derartige Mehrlagenfolienverpackung herzustellen. Diese Verpackungsmaschine bietet jedoch nicht die Möglichkeit, die Mittenfolie zu formen.

Die US 5 103 618 offenbart eine Verpackungsmaschine nach dem Oberbegriff von Anspruch 1.

Es war deshalb die Aufgabe der vorliegenden Erfindung eine Verpackungsmaschine und ein Verfahren zur Verfügung zu stellen, die die Nachteile des Standes der Technik nicht aufweisen.

Gelöst wird die Aufgabe mit einer Verpackungsmaschine gemäß Patentanspruch 1.

Die vorliegende Erfindung betrifft eine Verpackungsmaschine mit einer Siegelstation, die ein Ober- und ein Unterwerkzeug aufweist. Derartige Verpackungsmaschinen dienen insbesondere dazu Kunststoffverpackungen herzustellen. Insbesondere eignet sich die erfindungsgemäße Verpackungsmaschine dazu eine Mehrlagenfolienverpackung herzustellen. In einer Mehrlagenfolienverpackung sind mindestens zwei Produkte durch eine Mittenfolie getrennt voneinander verpackt. In der Siegelstation der erfindungsgemäßen Verpackungsmaschine wird eine Mittenfolienbahn an eine Unterfolienbahn gesiegelt. Dabei bewegen sich das Unter- und das Oberwerkzeug aufeinander zu. Das Siegeln der Mittenfolienbahn an die Unterfolienbahn erfolgt in der Regel unter Einwirkung von Wärme und/oder Druck.

Erfindungsgemäß ist nun vorgesehen, dass das Ober- und/oder Unterwerkzeug ein Mittel aufweist, um die Mittenfolienbahn zu formen. Das Formen der Mittenfolienbahn erfolgt vorzugsweise bevor diese an die Unterfolienbahn gesiegelt wird. Die Verbindung zwischen der Mittenfolienbahn und der Unterfolienbahn ist vorzugsweise peelfähig, also nicht fest bzw. stoffschlüssig verschweißt, sondern mit geringem Kraftaufwand lösbar.

Dadurch, dass das Ober- und/oder Unterwerkzeug ein Mittel zum Formen der Mittenfolienbahn aufweist, kann auf ein Formen der Mittenfolienbahn in einer separaten Formstation, verzichtet werden. Dieses vereinfacht die erfindungsgemäße Verpackungsmaschine erheblich.

Vorzugsweise weist das Ober- und/oder Unterwerkzeug eine Heiz-Zone auf, um die Mittenfolienbahn vor dem Formen zu erwärmen. Vorzugsweise ist diese Heiz-Zone in der Nähe, besonders bevorzugt in unmittelbarer Nähe, ganz besonders bevorzugt angrenzend an das Siegelmittel, beispielsweise den Siegelrahmen, des Ober- und/oder Unterwerkzeugs angeordnet. Vorzugsweise befindet sich die Heiz-Zone im Bereich des Oberwerkzeugs. Ebenso vorzugsweise kann die Heiz-Zone als separat vertikal angetriebene Einheit oder als Bestandteil des Stempels ausgeführt sein.

Vorzugsweise ist zwischen dem Ober- und/oder Unterwerkzeug ein Stempel vorgesehen, um die Mittenfolienbahn zu formen. Dieser Stempel ist vorzugsweise beweglich, insbesondere vertikal verschieblich, an dem Oberwerkzeug angeordnet. Vorzugsweise kann dieser Stempel temperiert, insbesondere beheizt oder gekühlt, werden. Insbesondere zur Optimierung der Qualität der Formung kann der Stempel mit Kanälen ausgerüstet sein, über die mit Vakuumeinrichtungen ein Restluftpolster abgesaugt werden kann, damit sich die Folie im Bodenbereich an den Stempel anlegt.

Ganz besonders bevorzugt weist der Stempel ein Formteil auf, das relativ zu dem Stempel beweglich, insbesondere horizontal verschieblich, gelagert ist. Dieses Formteil ist vorzugweise verschieblich an dem Stempel gelagert und kann sich in zwei vorzugsweise entgegengesetzte Richtungen, durch einen Antrieb angetrieben, bewegen. Mit diesem Formteil kann das Formen der Mittenfolienbahn unterstützt werden, insbesondere nachdem es von dem Stempel vorgeformt worden ist. Weiterhin ist es möglich, mit diesem Formteil die Mittenfolienbahn und die Unterfolienbahn gleichzeitig zu formen. Dadurch ist es möglich, ein Wiederverschlussmittel in die Mittenfolienbahn und in die Unterfolienbahn einzuformen. Vorzugsweise ist das Formteil beheizt.

Gemäß einer weiteren bevorzugten Ausführungsform der vorliegenden Erfindung weist das Ober- und/oder Unterwerkzeug eine Druckluftzufuhr auf, um die Mittenfolienbahn zu formen. Mit dieser Gaszufuhr kann insbesondere oberhalb der Mittenfolienbahn ein Überdruck erzeugt werden, der die Mittenfolienbahn in Richtung der Unterfolienbahn drückt. Dabei legt sich die Mittenfolienbahn vorzugsweise an ein auf der Unterfolienbahn platziertes Produkt und/oder an die Unterfolienbahn an. Diese Gaszufuhr kann alternativ oder zusätzlich auch dazu eingesetzt werden, um einen Unterdruck oberhalb der Mittenfolienbahn zu erzeugen. Mittels dieses Unterdrucks kann die Mittenfolienbahn in Richtung der Heiz-Zone bewegt werden, um den Wärmeaustausch zwischen der Heiz-Zone und der Mittenfolienbahn zu verbessern. Vorzugsweise ist das Unterwerkzeug zumindest abschnittsweise als Matrize für die zu formende Mittenfolienbahn gestaltet.

Vorzugsweise weist das Ober- und/oder Unterwerkzeug, insbesondere das Oberwerkzeug, ein bewegliches Formteil auf, um die Mittenfolienbahn zu formen oder deren Formung zu unterstützen. Dieses Formteil ist vorzugweise verschieblich an dem Oberwerkzeug gelagert und kann sich in zwei vorzugsweise entgegengesetzte Richtungen, durch einen Antrieb angetrieben, bewegen.

Weiterhin weist die erfindungsgemäße Verpackungsmaschine eine weitere Siegelstation auf, um eine Oberfolienbahn an die Mittenfolienbahn zu siegeln. Dieses Siegeln erfolgt insbesondere nachdem ein weiteres Produkt auf der Mittenfolienbahn platziert worden ist.

Weiterhin weist die erfindungsgemäße Verpackungsmaschine zwei getrennte Mittel, beispielsweise Stanzen, auf, um Begasungsöffnungen in die Mitten- und die Unterfolienbahn einzubringen, die Begasungsöffnung in der Mittenfolienbahn ist dabei zumindest teilweise überdechend mit der Begasungsöffnung in der Unterfolienbahn vorgesehen. Durch diese Begasungsöffnungen kann ein Gasaustausch zwischen der Mittenfolienbahn und der Unterfolienbahn sowie zwischen der Mittenfolienbahn und der Oberfolienbahn erfolgen. Das erste Mittel ist vor der ersten Siegelstation und das zweite Mittel nach der ersten Siegelstation vorgesehen.

Weiterhin bevorzugt weist die erfindungsgemäße Verpackungsmaschine zwei getrennte Einlegestationen auf. Mit der ersten Einlegestation werden erste Produkte jeweils auf eine in die Unterfolienbahn eingeformte Verpackungsmulde eingelegt. Mit der zweiten Einlegestation werden zweite Produkte auf die, vorzugsweise ebenfalls als Mulde geformte, Mittenfolienbahn platziert.

Weiterhin bevorzugt weist die erfindungsgemäße Verpackungsmaschine stromabwärts von der zweiten Siegelstation eine Vereinzelungsstation auf, in der die jeweiligen fertiggestellten Verpackungen aus der Unter-, Mitten- und Oberfolienbahn herausgeschnitten werden.

Als eine weitere Ausführungsform der vorliegenden Erfindung können die hier interessierenden Mehrlagenfolienverpackungen auch zwei oder mehr Mittenfolienbahnen beinhalten. Bei allen Ausführungsformen kann die Oberfolie auch geformt sein, entweder nach unten geformt, um das oberste eingelegte Produkt sicher zu halten und gleichzeitig eine stabilere Gesamtpackung zu erhalten oder nach oben geformt, um eine ansprechendere Gestaltung der gesamten Packung zu erreichen.

Bei den hier interessierenden Folienbahnen kann es sich um jede beliebige dem Fachmann im Bereich der Lebensmitteltechnik bekannte, Folie handeln, beispielsweise ist die Folie eine Weich- oder Hartfolie aus PP, PA/PE, PVC, A-Pet, Papier, Pappe, Metall oder einem sinnvollen Gemisch bzw. stoffschlüssig miteinander verbundenen Lagen aus diesen Komponenten.

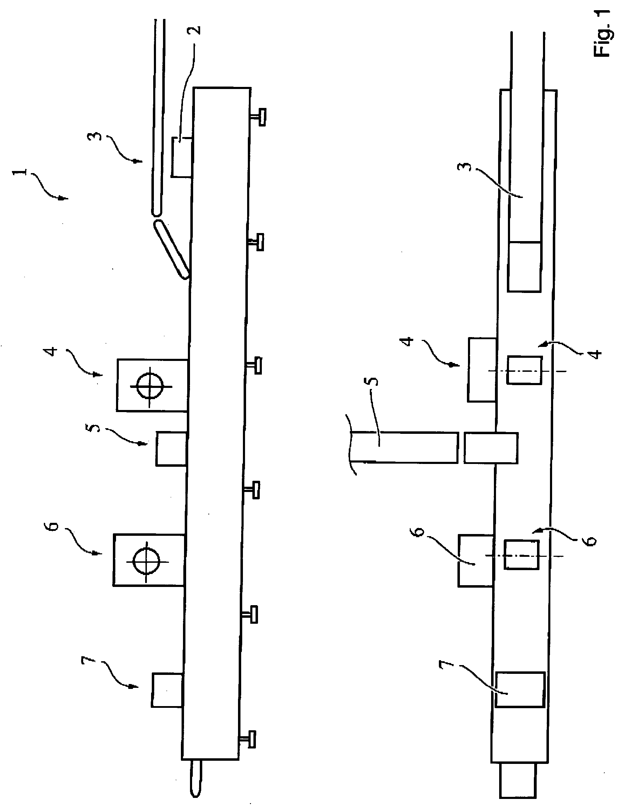

Im Folgenden wird die Erfindung anhand der Figuren 1 - 5 erläutert.

Diese Erläuterungen sind lediglich beispielhaft und schränken den allgemeinen Erfindungsgedanken nicht ein. Diese Erläuterungen gelten für die erfindungsgemäße Verpackungsmaschine und für das erfindungsgemäße Verfahren gleichermaßen.
- **Figur 1**: zeigt die erfindungsgemäße Verpackungsmaschine.
- **Figur 2**: zeigt eine erste Ausführungsform der ersten Form-/ Siegelstation.
- **Figur 3**: zeigt eine weitere Ausführungsform der ersten Form-/ Siegelstation.
- **Figur 4**: zeigt noch eine weitere Ausführungsform der ersten Form-/ Siegelstation.
- **Figur 4a**: zeigt das Einformen des Wiederverschlussmittels.
- **Figur 5**: zeigt eine Ausführungsform der zweiten Siegelstation.

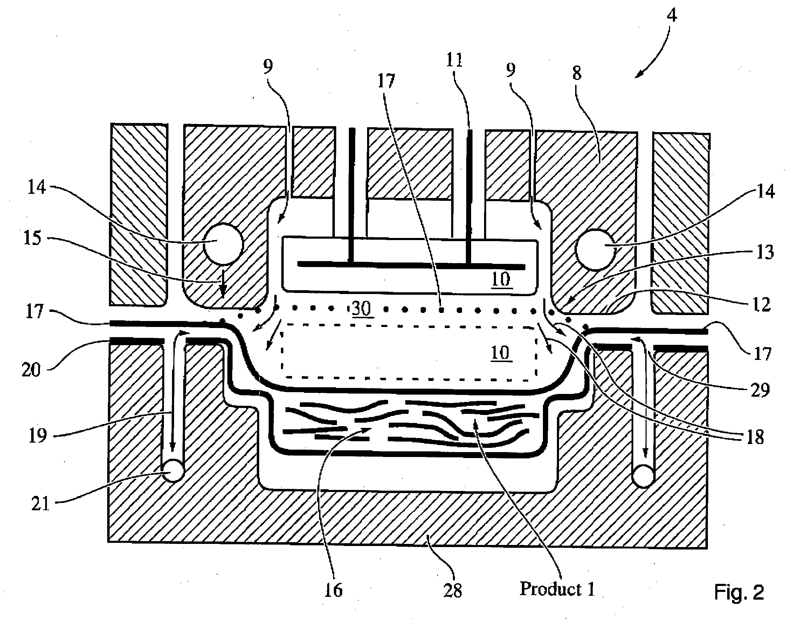

Figur 1 zeigt die erfindungsgemäße Verpackungsmaschine. Entlang dieser Verpackungsmaschine wird, insbesondere taktweise, eine Unterfolienbahn, beispielsweise mit zwei rechts und links der Unterfolienbahn angeordneten Transportketten, transportiert. In diese Unterfolienbahn 20 wird zunächst mittels einer Formstation 2 eine Verpackungsmulde 16, beispielsweise durch Tiefziehen, eingeformt. Stromabwärts der Formstation 2 ist ein erster Einleger 3 vorgesehen, der ein erstes Produkt (Produkt 1) in die Verpackungsmulde 16 einlegt. Sodann wird die befüllte Verpackung in die erste Form-/Siegelstation transportiert, in der eine Mittenfolienbahn 17 an die Unterfolienbahn 20, insbesondere peelfähig, gesiegelt wird. Insbesondere vor dem Siegeln wird die Mittenfolienbahn, wie anhand der Figuren 2 - 4a noch erläutert wird, verformt. Ist ein Gasaustausch zwischen der Unterfolienbahn und der Mittenfolienbahn vor dem Siegeln gewünscht, werden vorzugsweise stromaufwärts der ersten Form-/Siegelstation eine oder mehrere Ausnehmungen in die Unterfolienbahn, beispielsweise durch Stanzen, eingebracht, durch die der Gasaustausch vorzugsweise erfolgt. Stromabwärts der ersten Form-/Siegelstation ist ein zweiter Einleger 6 vorgesehen, der ein zweites Produkt (Produkt 2) auf die Mittenfolienbahn, insbesondere in eine in die Mittenfolienbahn eingeformte Mulde, einlegt. Anschließend wird in einer stromabwärts von dem zweiten Einleger vorgesehenen zweiten Siegelstation eine Oberfolienbahn an die Mittenfolienbahn gesiegelt. Ist ein Gasaustausch zwischen der Oberfolienbahn und der Mittenfolienbahn vor dem Siegeln gewünscht, müssen stromaufwärts von der zweiten Siegelstation Öffnungen in die Mittenfolienbahn eingearbeitet, insbesondere gestanzt, werden.

Abschließend werden die Verpackungen in einer Vereinzelungsstation 7 aus den Folienbahnen 17, 20, 26 vereinzelt.

Figur 2 zeigt eine erste Ausführungsform der ersten Form-/Siegelstation 4. Diese weist ein Unterwerkzeug 28 und ein Oberwerkzeug 8 auf, die zum Siegeln aufeinander zu und danach, zum Weitertransport der Folienbahn 12, wieder voneinander entfernt werden. Das Unterwerkzeug 28 nimmt die in die Unterfolienbahn 20 eingeformte Verpackungsmulde 16 auf. Die Unterfolienbahn 20 befindet sich zwischen dem Unterwerkzeug 28 und dem Oberwerkzeug 8 und wird senkrecht zur Papierebene in die Papierebene transportiert. Oberhalb der Unterfolie 20 ist die Mittenfolie 17 angeordnet, die ebenfalls senkrecht zur Papierebene vorgesehen ist und in diese hineintransportiert wird. Oberhalb der Mittenfolie befindet sich das Oberwerkzeug 8, das ein Siegelmittel 12, hier einen Siegelrahmen 12, aufweist, um die Mittenfolie 17 an die Unterfolie 20 zu siegeln. Vorzugsweise ist diese Siegelnaht peelfähig, d.h. vom Benutzer leicht zu öffnen. Das Siegeln erfolgt vorzugsweise mit Druck und unter Einfluss von Wärme, die beispielsweise durch ein Heiz-Medium 14 zur Verfügung gestellt wird. Dieses Heiz-Mittel 14 erwärmt insbesondere das Siegelmittel 12, hier den Siegelrahmen. Um in die Mittenfolienbahn 17, wie dargestellt, eine Mulde einformen zu können, ist an dem Oberwerkzeug 8 vorzugsweise eine Heiz-Zone 13 vorgesehen, die besonders bevorzugt ebenfalls durch das Heiz-Mittel 14 beheizt ist. Mit dieser Heiz-Zone wird die Mittenfolienbahn 17 vorzugsweise bis zu ihrer Plastifizierungstemperatur erwärmt, um diese dann plastisch verformen zu können. Gegebenenfalls ist aber auch schon die Wärme des Siegelmittels 12 ausreichend um die Mittenfolienbahn zu verformen. Um den Wärmeaustausch zwischen der Heiz-Zone 13 und der Mittenfolienbahn 17 zu verbessern, wird vorzugsweise die Mittenfolienbahn 17 in Anlage mit der Heiz-Zone 13 gebracht. Dies kann beispielsweise dadurch erfolgen, dass durch die Kanäle 9 ein Unterdruck erzeugt wird. Das Verformen der Mittenfolienbahn 17 kann beispielsweise durch einen Stempel 10 erfolgen oder unterstützt werden, der verschieblich in dem Oberwerkzeug 8 gelagert ist. Vorzugsweise weist dieser Stempel 10 ein Temperierungsmittel 11, insbesondere Kühlmittel 11, auf, um einen bestimmten Bereich der Mittenfolie 17 zu kühlen und ein Wegfließen von Material aus dem gekühlten Bereich zu verhindern. Alternativ oder zusätzlich erfolgt die Verformung durch Druck, insbesondere Luftdruck, der beispielsweise durch die Kanäle 9 aufgebaut wird und die Mittenfolienbahn 17 in Richtung des Unterwerkzeuges sowie des Produktes 1 drückt. Dieses ist mittels der Pfeile 18 symbolisiert. Zum Siegeln der Mittenfolienbahn an die Unterfolienbahn werden das Oberwerkzeug und das Unterwerkzeug aufeinander zubewegt. Sollte vor dem Siegeln ein Gasaustausch in dem Raum zwischen der Mittenfolienbahn 17 und der Unterfolienbahn 20 und im Bereich des Produktes 1 erwünscht sein, erfolgt dieser vorzugsweise durch die Ausnehmung 29 in der Unterfolie. Durch diese Ausnehmung kann sowohl Gas abgesaugt als auch Gas eingeblasen werden, was durch den Doppelpfeil 19 symbolisiert ist und was anhand des Gasaustauschkanals 21 erfolgt.

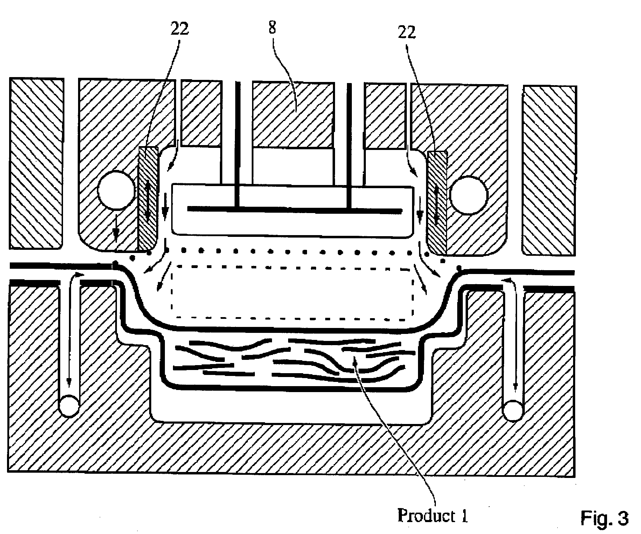

Figur 3 zeigt im Wesentlichen die Ausführungsform gemäß Figur 2, wobei in dem vorliegenden Fall zur Unterstützung oder Durchführung der Verformung der Mittenfolie an dem Oberwerkzeug 8 ein verschiebliches Element 22, beispielsweise ein Schieber, vorgesehen ist. Dieses Element kann, wie durch den Doppelpfeil symbolisiert, rauf- und runterbewegt werden.

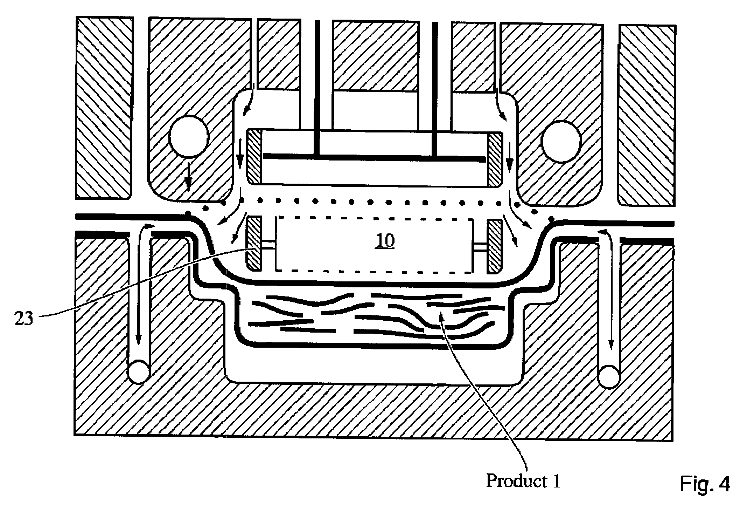

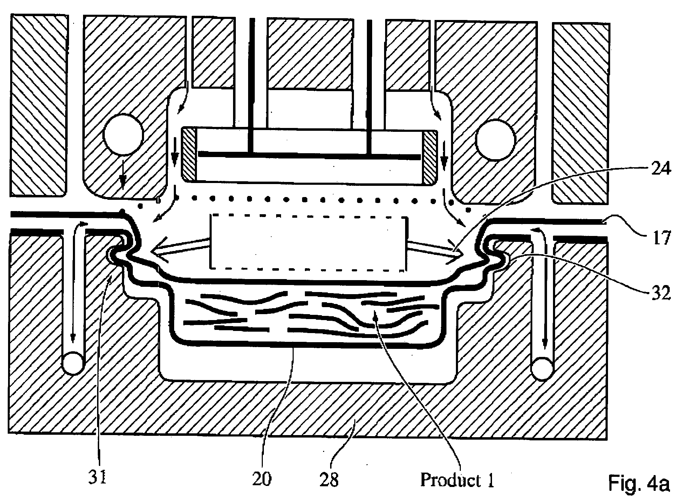

Auch bei der Ausführungsform gemäß Figur 4 kann im Wesentlichen auf die Ausführungsform gemäß Figur 2 Bezug genommen werden. In dem vorliegenden Fall weist der Stempel 10 ein bewegliches Element 23 auf, das relativ zu dem Stempel 10, insbesondere horizontal beweglich, vorgesehen ist und mit dem die Formung der Mittenfolienbahn 17 unterstützt oder durchgeführt wird.

Bei der Ausführungsform gemäß Figur 4a kann auf die Ausführungen gemäß den Figuren 2 -4 Bezug genommen werden. In dieser Figur ist die Einformung eines Wiederverschlussmittels in die Unterfolienbahn 20 und in die Mittenfolienbahn 17 dargestellt. Dies erfolgt durch ein Formwerkzeug 24, das vorzugsweise beheizt ist und das sowohl in die Unterfolienbahn 20 als auch in die Mittenfolienbahn 17 im Wesentlichen gleichzeitig ein Form- und/oder Kraftschlussmittel 31 einformt. Dafür weist das Unterwerkzeug 28 vorzugsweise eine Ausnehmung oder Einbuchtung 32 auf, die als Wiederlager/Formmittel für das Werkzeug 24 dient.

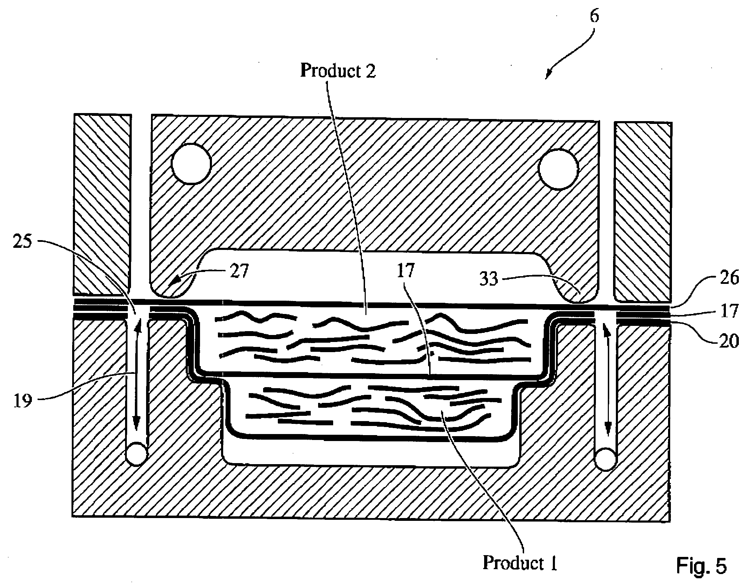

Figur 5 zeigt die zweite Siegelstation 6. Diese weist ebenfalls ein Ober- und ein Unterwerkzeug auf, zwischen denen sich die Unterfolie 20 und die an die Unterfolie 20 gesiegelte Mittenfolie 17 sowie die Oberfolie 26 befindet. Alle Folien 17, 20, 26 werden senkrecht zur Papierebene in die Papierebene hineintransportiert. Während des Siegelns stehen diese Folienbahnen jedoch vorzugsweise still. Vor dem Siegeln der Oberfolienbahn 26 an die Mittenfolienbahn 17 wurde in die Mulde in der Mittenfolienbahn 17 ein zweites Produkt (Produkt 2) eingelegt. Sollte ein Gasaustausch gewünscht sein, so erfolgt dieser über eine Ausnehmung 25, die in die Mittenfolienbahn stromaufwärts der zweiten Siegelstation eingefügt worden ist. Der Gasaustausch ist durch den Doppelpfeil 19 symbolisiert. Zum Siegeln werden das Unter- und das Oberwerkzeug aufeinander zubewegt und die Siegelung erfolgt, wie durch den Pfeil 27 dargestellt, mittels eines, insbesondere beheizten, Siegelrahmens 33.

### Bezugszeichenliste:

- 1: Verpackungsmaschine
- 2: Formstation
- 3: erster Einleger
- 4: erste Form-/Siegelstation
- 5: zweiter Einleger
- 6: zweite Siegelstation
- 7: Vereinzelung
- 8: Oberkzeug
- 9: Gas-, Luftkanal
- 10: Stempel
- 11: Temperierung, Kühlung
- 12: Siegelmittel, Siegelrahmen
- 13: Heizzone
- 14: Heizmedium
- 15: Erwärmung der Folie für die Verformung
- 16: Verpackungsmulde
- 17: Folienbahn, Mittenfolienbahn
- 18: Druckgaszufuhr, Druckluftzufuhr
- 19: Gasaustausch
- 20: Unterfolienbahn
- 21: Gasaustauschkanal
- 22: bewegliches Formteil
- 23: bewegliches Formteil
- 24: bewegliches Formteil am Stempel zur Herstellung eines Schnappverschlusses
- 25: Begasungsöffnung in der Mittenfolie
- 26: Oberfolienbahn
- 27: Siegeln
- 28: Unterwerkzeug
- 29: Begasungsöffnung in der Unterfolienbahn
- 30: Bereich zwischen dem Ober- und dem Unterwerkzeug
- 31: Wiederverschlussmittel
- 32: Ausnehmung
- 33: Siegelmittel, Siegelrahmen
- Produkt 1: erstes Produkt
- Produkt 2: zweites Produkt

## Patentansprüche

1. Verpackungsmaschine (1) mit einer Siegelstation (4), die ein Oberwerkzeug (8) und ein Unterwerkzeug (28) aufweist und die eine Mittenfolienbahn (17) an eine Unterfolienbahn (20) siegelt, wobei das Ober- und/oder Unterwerkzeug (8, 28) ein Mittel (10, 13, 18, 22, 23) aufweist, um die Mittenfolienbahn (17) zu formen und wobei sie eine weitere Siegelstation aufweist, um die Oberfolienbahn (26) an die Mittenfolienbahn (17) zu siegeln, **dadurch gekennzeichnet, dass** sie zwei getrennte Mittel aufweist, um eine Begasungsöffnung (25, 29) in die Mitten- und die Unterfolienbahn einzubringen, wobei das Mittel zur Einbringung der Begasungsöffnungen in die Mittenfolienbahn stromaufwärts von der weiteren Siegelstation vorgesehen ist und die Begasungsöffnung in der Mittenfolienbahn zumindest teilweise überdeckend mit der Begasungsöffnung in der Unterfolienbahn vorgesehen ist.

2. Verpackungsmaschine (1) nach Anspruch 1, **dadurch gekennzeichnet, dass** das Ober- und/oder Unterwerkzeug (8, 28) eine Heizzone (13) aufweist, um die Mittenfolienbahn (17) vor dem Formen zu erwärmen.

3. Verpackungsmaschine (1) nach einem der voranstehenden Ansprüche, **dadurch gekennzeichnet, dass** zwischen dem Ober- und/oder Unterwerkzeug (8, 28) ein Stempel (10) vorgesehen ist, um die Mittenfolienbahn (17) zu formen.

4. Verpackungsmaschine nach Anspruch 3, **dadurch gekennzeichnet, dass** der Stempel temperierbar ist.

5. Verpackungsmaschine nach einem der Ansprüche 3 oder 4, **dadurch gekennzeichnet, dass** der Stempel (10) ein Formteil (24) aufweist, dass relativ zu dem Stempel (10) beweglich ist, um die Mittenfolienbahn (17) und/oder die Unterfolienbahn (20) zu formen.

6. Verpackungsmaschine (1) nach einem der voranstehenden Ansprüche, **dadurch gekennzeichnet, dass** das Ober- und/oder Unterwerkzeug (8, 28) eine Druckgaszufuhr (18) aufweist, um die Mittenfolienbahn (17) zu formen.

7. Verpackungsmaschine (1) nach einem der voranstehenden Ansprüche, **dadurch gekennzeichnet, dass** das Ober- und/oder Unterwerkzeug (8, 28) ein bewegliches Formteil (22) aufweist, um die Mittenfolienbahn (17) zu formen.

8. Verpackungsmaschine nach einem der voranstehenden Ansprüche, **dadurch gekennzeichnet, dass** sie zwei Einlegestationen (4, 6) aufweist.

9. Verpackungsmaschine nach einem der voranstehenden Ansprüche, **dadurch gekennzeichnet, dass** sie eine Vereinzelungsstation (7) aufweist.

## Claims

1. Packaging machine (1) with a sealing station (4) which has an upper tool (8) and a lower tool (28) and which seals a centre film web (17) to a lower film web (20), wherein the upper tool and/or the lower tool (8, 28) have/has a means (10, 13, 18, 22, 23) for shaping the centre film web (17), and wherein said packaging machine has a further sealing station for sealing the upper film web (26) to the centre film web (17), **characterized in that** said packaging machine has two separate means for introducing a gassing opening (25, 29) into the centre film web and the lower film web, wherein the means for introducing the gassing openings into the centre film web is provided upstream of the further sealing station and the gassing opening in the centre film web is provided at least partially overlapping with the gassing opening in the lower film web.

2. Packaging machine (1) according to Claim 1, **characterized in that** the upper tool and/or the lower tool (8, 28) have/has a heating zone (13) for heating the centre film web (17) prior to shaping.

3. Packaging machine (1) according to one of the preceding claims, **characterized in that** a die (10) for shaping the centre film web (17) is provided between the upper tool and/or the lower tool (8, 28).

4. Packaging machine according to Claim 3, **characterized in that** the die is temperature-controllable.

5. Packaging machine according to one of Claims 3 and 4, **characterized in that** the die (10) has a shaping part (24) which, for shaping the centre film web (17) and/or the lower film web (20), is movable in relation to the die (10).

6. Packaging machine (1) according to one of the preceding claims, **characterized in that** the upper tool and/or the lower tool (8, 28) have/has a compressed-gas supply (18) for shaping the centre film web (17).

7. Packaging machine (1) according to one of the preceding claims, **characterized in that** the upper tool and/or the lower tool (8, 28) have/has a movable shaping part (22) for shaping the centre film web (17).

8. Packaging machine according to one of the preceding claims, **characterized in that** said packaging machine has two inserting stations (4, 6).

9. Packaging machine according to one of the preceding claims, **characterized in that** said packaging machine has a singularization station (7).

## Revendications

1. Machine d'emballage (1) comprenant un poste de scellage (4) qui présente un outil supérieur (8) et un outil inférieur (28) et qui scelle une bande de film centrale (17) sur une bande de film inférieure (20), l'outil supérieur et/ou l'outil inférieur (8, 28) présentant un moyen (10, 13, 18, 22, 23) afin de former la bande de film centrale (17) et présentant un poste de scellage supplémentaire afin de sceller la bande de film supérieure (26) à la bande de film centrale (17), **caractérisée en ce qu'**elle présente deux moyens séparés pour réaliser une ouverture d'alimentation en gaz (25, 29) dans la bande de film centrale et la bande de film inférieure, le moyen pour introduire les ouvertures d'alimentation en gaz dans la bande de film central étant prévu en amont du poste de scellage supplémentaire et l'ouverture d'alimentation en gaz dans la bande de film centrale étant prévue de manière à recouvrir au moins en partie l'ouverture d'alimentation en gaz dans la bande de film inférieure.

2. Machine d'emballage (1) selon la revendication 1, **caractérisée en ce que** l'outil supérieur et/ou inférieur (8, 28) présentent une zone de chauffage (13) afin de chauffer la bande de film centrale (17) avant le formage.

3. Machine d'emballage (1) selon l'une quelconque des revendications précédentes, **caractérisée en ce qu'**entre l'outil supérieur et l'outil inférieur (8, 28) est prévu un poinçon (10) pour former la bande de film centrale (17).

4. Machine d'emballage selon la revendication 3, **caractérisée en ce que** le poinçon peut être régulé en température.

5. Machine d'emballage selon l'une quelconque des revendications 3 ou 4, **caractérisée en ce que** le poinçon (10) présente une pièce moulée (24), qui peut être déplacée par rapport au poinçon (10) afin de former la bande de film centrale (17) et/ou la bande de film inférieure (20).

6. Machine d'emballage (1) selon l'une quelconque des revendications précédentes, **caractérisée en ce que** l'outil supérieur et/ou l'outil inférieur (8, 28) présentent un apport en gaz sous pression (18) pour former la bande de film centrale (17).

7. Machine d'emballage (1) selon l'une quelconque des revendications précédentes, **caractérisée en ce que** l'outil supérieur et/ou inférieur (8, 28) présentent une pièce moulée mobile (22) pour former la bande de film centrale (17).

8. Machine d'emballage selon l'une quelconque des revendications précédentes, **caractérisée en ce qu'**elle présente deux postes d'insertion (4, 6).

9. Machine d'emballage selon l'une quelconque des revendications précédentes, **caractérisée en ce qu'**elle présente un poste de séparation (7).
